(19) **Europäisches Patentamt**
European Patent Office
Office européen des brevets

(11) **EP 1 014 109 B1**

(12) **EUROPÄISCHE PATENTSCHRIFT**

(45) Veröffentlichungstag und Bekanntmachung des Hinweises auf die Patenterteilung:
**06.05.2009 Patentblatt 2009/19**

(51) Int Cl.:
***G01S 13/93*** *(2006.01)*

(21) Anmeldenummer: **99124705.7**

(22) Anmeldetag: **11.12.1999**

(54) **Einrichtung zur Darstellung einer von einer Abstandsregeleinrichtung eines Kraftfahrzeuges bestimmten Regelsituation**

Apparatus for representing a control situation determined by a distance control device of a road vehicle

Equipement pour la représentation d'une situation de commande déterminée par un dispositif d'asservissement de distance d'un véhicule routier

(84) Benannte Vertragsstaaten:
**DE FR GB**

(30) Priorität: **22.12.1998 DE 19859345**

(43) Veröffentlichungstag der Anmeldung:
**28.06.2000 Patentblatt 2000/26**

(73) Patentinhaber: **Continental Automotive GmbH 30165 Hannover (DE)**

(72) Erfinder:
• **Bienias, Robert 65428 Rüsselsheim (DE)**
• **Heinrichs-Bartscher, Sascha 65843 Sulzbach (DE)**

(56) Entgegenhaltungen:
**EP-A- 0 464 821        WO-A-89/06808**
**DE-A- 4 406 339        US-A- 4 349 823**

**Beschreibung**

Die Erfindung betrifft eine Einrichtung zur Darstellung einer von einer Abstandsregeleinrichtung eines Kraftfahrzeuges bestimmten Regelsituation auf einer Anzeigeeinrichtung, wobei die Abstandsregeleinrichtung mit einem Sensor verbunden ist, welcher die Koordinaten und die relative Geschwindigkeit der vor dem Kraftfahrzeug befindlichen Hindernisse detektiert und an die, die voraussichtliche Fahrspur des Kraftfahrzeuges bestimmende Abstandsregeleinrichtung weiterleitet, wobei die Abstandsregeleinrichtung aus diesen Daten ein Regelobjekt bestimmt, auf welches der Abstand des Kraftfahrzeuges geregelt wird.

Bei einem Abstandsregelgerät für Kraftfahrzeuge werden zur Einstellung des Abstandes des zu regelnden Kraftfahrzeuges auf ein vorausfahrendes Fahrzeug eine Vielzahl von Daten sowohl von einem Abstandssensor als auch von der Abstandsregelelektronik selbst erstellt. Der Abstandssensor erfaßt dabei die im Sensorstrahl liegenden Hindernisse und ermittelt die Raumkoordinaten und die relative Geschwindigkeit zum zu regelnden Kraftfahrzeug.

Das Abstandsregelgerät bestimmt einen voraussichtigen Fahrkorridor des zu regelnden Fahrzeuges. Darüber hinaus ermittelt die Abstandsregelelektronik aus den von dem Abstandssenor erfaßten Hindernissen ein Hindernis, auf welches der Abstand des Kraftfahrzeuges geregelt werden soll. Die dem resultierenden Abstandswert zugrundeliegende Regelsituation, welche durch die Abstandsregeleinrichtung bestimmt wird, muß hinsichtlich ihrer korrekten Funktionsweise überprüft werden.

Um die Zuverlässigkeit der Arbeitsweise der Regelelektronik zu überwachen, ist es üblich das Verkehrsgeschehen zusätzlich über Videokameras zu beobachten und daraus Schlußfolgerungen über die ordnungsgemäße Arbeitsweise der Abstandsregeleinrichtung zu ziehen. Für diesen Zweck muß ein zusätzliches Erfassungssystem installiert werden, was den Aufwand zur Prüfung der Funktionsweise der Abstandsregeleinrichtung verteuert.

Die EP 0 464 821 zeigt eine Einrichtung zur perspektivischen Darstellung in einem Abstendswarnsystem.

Der Erfindung liegt somit die Aufgabe zugrunde, eine Einrichtung anzugeben, mittels welcher die Vielzahl der zur Abstandsregelung in einem Kraftfahrzeug notwendigen Daten in einfacher Weise auf ihre Richtigkeit geprüft werden können.

Erfindungsgemäß ist die Aufgabe dadurch gelöst, daß die Abstandsregeleinrichtung mit einer Anzeigesteuereinrichtung verbunden ist, welche die von dem Sensor erfaßten und von der Abstandsregeleinrichtung errechneten Daten in eine annähernd maßstabsgerechte Draufsicht der Regelsituation vor dem Kraftfahrzeug umsetzt und diese zur Anzeige an die Anzeigeeinrichtung ausgibt.

Der Vorteil der Erfindung besteht darin, daß alle von der Abstandsregeleinrichtung und vom Abstandssensor ermittelten Werte auf einem Bildschirm darstellbar sind und durch den Bediener mit der tatsächlichen Regelsituation vor dem Kraftfahrzeug verglichen werden können. Auf eine zweite autark arbeitende Vergleichseinrichtung wird vollständig verzichtet. Zu Simulationszwecken können die Daten in der Abstandsregeleinrichtung verändert werden, wobei diese Veränderung sofort auf der Anzeigeeinrichtung sichtbar wird.

Vorteilhafterweise stellt die Draufsicht alle im gesamten Erfassungsbereich des Sensorstrahles detektierten Hindernisse und deren Anordnung in der voraussichtlichen Fahrspur des Kraftfahrzeuges dar. Dabei entspricht das Koordinatensystem der Anzeigeeinrichtung dem maximalen Erfassungsbereich des Sensorstrahles. Auf diese Weise können auch Einstellungen deutlich sichtbar werden, die mit bloßem Auge nicht erfaßbar sind.

In einer Weiterbildung ist die Abstandsregeleinrichtung über eine Datenanpassungseinrichtung mit der Anzeigesteuerungseinrichtung verbunden, wobei die Datenanpassungseinrichtung eine Recheneinheit aufweist, welche mit mehreren Schnittstellen verbunden ist, wobei jede Schnittstelle eine unveränderliche oder eine frei programmierbare Konfiguration aufweist, und die Abstandsregeleinrichtung an eine erste, ihrer elektronischen Konfiguration entsprechenden Schnittstelle und die Anzeigesteuerungseinrichtung an eine zweite ausgewählte Schnittstelle angeschlossen ist, wobei die Recheneinheit nach Erhalt eines Steuerbefehls eines von mehreren in einem Speicher abgelegten Anpassungsprogrammen aktiviert, welche die von der Anzeigesteuerungseinrichtung und der Abstandsregeleinrichtung auszutauschenden Daten anpaßt.

Das hat den Vorteil, daß auf Anpassungsschaltungen, die in Abhängigkeit von der elektronischen Architektur des Abstandsregelgerätes bisher notwendig waren, verzichtet werden kann. Durch eine einfache softwaremäßige Verknüpfung wird für jede elektronische Konfiguration des Abstandsregelgerätes die richtige Einstellung des Datenanpassungsgerätes einfach realisiert.

Somit kann jedes Abstandsregelgerät, egal welche elektronische Konfiguration es aufweist, ohne Probleme an ein und dieselbe Anzeigesteuerungseinrichtung angeschlossen werden.
Die Datenanpassungseinrichtung übernimmt dabei die Funktion eines Adapters, welcher elektronische Einrichtungen jeglicher Art frei koppelt.

Zur freien Konfigurierbarkeit der Datenanpassungseinheit ist die Recheneinheit zur Aus- und Eingabe von Daten in die Abstandsregeleinrichtung mit einer seriellen Schnittstelle oder einer Busschnittstelle verbunden, während die Datenein- und -ausgabe mit der Anzeigesteuereinrichtung über eine serielle oder parallele Schnittstelle erfolgt.

Dabei ist es von besonderem Vorteil, daß die Auswahl der Daten, welche von der Abstandsregeleinrichtung an die Anzeigesteuereinrichtung übertragen werden sollen, durch die Anzeigesteuereinrichtung konfigurierbar sind, indem die Anzeigesteuereinrichtung die Adressen an die Abstandsregeleinrichtung ausgibt, deren Daten übertragen werden sollen.

In einer Ausgestaltung sind zu Simulationszwecken über die Anzeigesteuereinrichtung Änderungen der Regelsituation in die Abstandsregeleinrichtung eingebbar, wobei die von der Abstandsregeleinrichtung neu berechneten Daten als Draufsicht der Regelsituation auf der Anzeigeeinrichtung dargestellt werden.

Die Abstandsregeleinrichtung bestimmt unter Berücksichtigung der Sensordaten und der Fahrzeugdaten die sich ergebende neue Regelsituation. Insbesondere wird dabei die Regelsituation bei einer gegenüber der ursprünglichen schmaleren oder breiteren Fahrspurbreite betrachtet. Durch diese Maßnahme kann die Funktionsweise des Abstandsregelsystems bei unterschiedlichen Gegebenheiten getestet werden.

Darüber hinaus können zu Simulationszwecken bestimmte, vom Sensor erfaßte Objekte aus der Anzeige ausgeblendet werden. Die Abstandsregeleinrichtung verhält sich bei der Bestimmung der Fahrspur so, als wenn diese Objekte nicht vom Sensorstrahl erfaßt wurden und ermittelt eine Regelsituation ohne diese Objekte.

Die Erfindung läßt zahlreiche Ausführungsformen zu. Eine davon soll anhand der in der Zeichnung dargestellten Figuren näher erläutert werden.

Es zeigen:

Figur 1: Abstandsregeleinrichtung in einem Kraftfahrzeug

Figur 2: Erfindungsgemäße Vorrichtung zur Darstellung der Regelsituation.

Figur 3: Darstellung der Regelsituation auf einem Monitor.

Gleiche Merkmale sind mit gleichen Bezugszeichen gekennzeichnet.

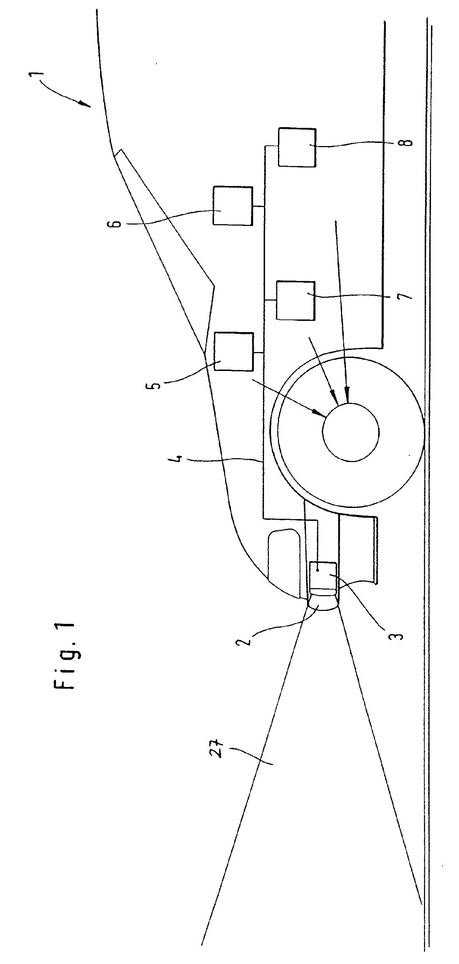

In Figur 1 ist am Stoßfänger 2 eines Kraftfahrzeuges 1 ein automatisches Geschwindigkeits- und Abstandsregelsystem 3 zur Einhaltung des Sicherheitsabstandes von Fahrzeugen angeordnet, welches einen Radarsensor und die Abstandsregeleinrichtung enthält. Über ein im Fahrzeug 1 vorhandenes Bussystem 4 ist das automatische Geschwindigkeits- und Abstandsregelsystem 3 mit der Motorsteuerung 5, der Bremse 7 oder dem Getriebe 8 verbunden. Elektronische Befehle regulieren durch Eingriff in die Motorsteuerung 5, die Bremse 7 bzw. das Getriebe 8 automatisch den Abstand und die Geschwindigkeit des zu regelnden Fahrzeuges 1, wenn sich dieses an ein langsameres, vorausfahrendes Fahrzeug annähert. Über eine Anzeigeeinrichtung 6, die ebenfalls von dem Geschwindigkeits- und Abstandsregelsystem 3 über das Bussystem 4, vorzugsweise einen CAN-Bus angesteuert wird, wird die aktuelle Geschwindigkeit und der Abstand zum vorausfahrenden Fahrzeug angezeigt.

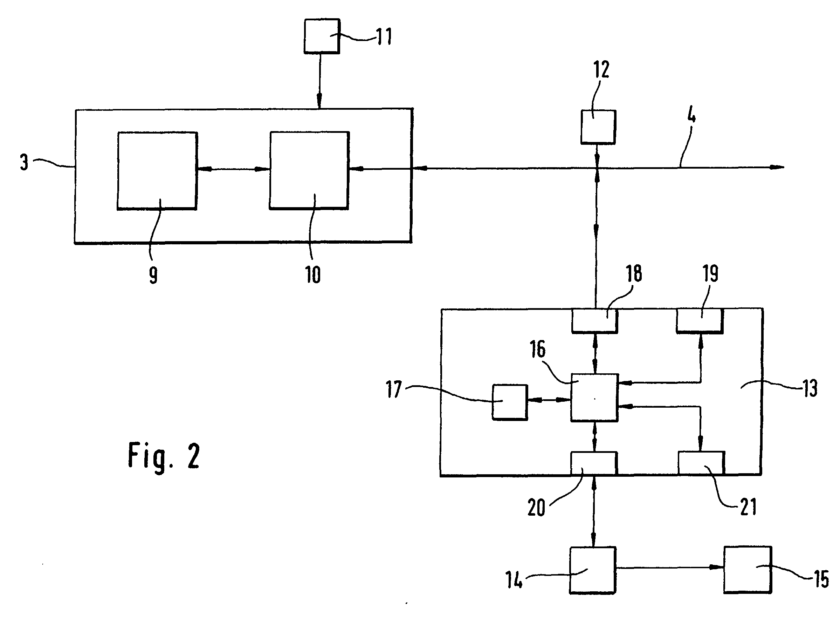

Wie aus Figur 2 ersichtlich besteht das Geschwindigkeits- und Abstandsregelsystem aus einem einen Sensorstrahl aussendenden Radarsensor 9. Der Radarsensor 9 ist mit der Abstandsregeleinrichtung 10 verbunden. Ein Gierratensensor 11 liefert Meßwerte an die Abstandsregeleinrichtung 10.

Neben dem Geschwindigkeits- und Abstandsregelsystem 3 ist an das Bussystem 4 des Fahrzeuges 1 weiterhin ein Drehzahlsensor 12 angeschlossen, welcher Informationen über die aktuelle Geschwindigkeit des Kraftfahrzeuges liefert. Des weiteren ist das Bussystem 4 mit einer Datenanpassungseinrichtung 13 verbunden, die wiederum an einen PC 14 angeschlossen ist, welcher eine Anzeigeeinrichtung in Form eines Monitors 15 ansteuert.

Die Datenanpassungseinrichtung 13 besteht aus einem Mikroprozessor 16 welcher mit einem Festwertspeicher 17 und mehreren Schnittstellen 18, 19, 20, 21 verbunden ist. Die Schnittstellen sind alle fest konfiguriert. So ist die Schnittstelle 18 eine Busschnittstelle und die Schnittstelle 19 eine serielle Schnittstelle. Je nachdem, auf welche Art und Weise die Daten innerhalb des Kraftfahrzeuges 1 übertragen werden, wird das Geschwindigkeits- und Abstandsregelsystem 3 an eine der beiden Schnittstellen 18, 19 angeschlossen und so über die Datenanpassungseinrichtung 13 mit dem PC 14 verbunden.

Soll die Anpassungseinrichtung 13 zur Anpassung der vom PC 14 erstellten Daten an den Datenbus 4 des Kraftfahrzeuges 1 bzw. zur Anpassung der vom Datenbus 4 übertragenen Daten an den PC 14 dienen, wird die parallele Schnittstelle des PCs 14 an die parallele, mit dem Mikroprozessor 16 verbundene Eingangschnittstelle 20 der Datenanpassungseinrichtung 20 angeschlossen. Die Busleitung 4 wird dabei an die CAN- Busschnittstelle 18 geführt. Bei der Übertragung von Daten und/oder Betriebsprogrammen werden in dem PC 14 die Daten konfiguriert, welche der Mikroprozessor 10 über das Bussystem 4 aus dem Geschwindigkeits- und Abstandsregelgerät 10 ausliest. Die Adressen dieser Daten werden vom PC 14 in den Mikroprozessor 16 über die parallele Schnittstelle 20 eingegeben. Der Mikrorechner 16 aktiviert vor Übertragungsbeginn ein Konfigurationsprogramm, welches die von der Abstandsregelelektronik 10 an den PC 14 übertragenen Daten so formatiert, daß sie von dem PC 14 verarbeitet werden können.

Ebenso verhält es sich, wenn vom PC 14 Daten an die Abstandsregeleinrichtung 10 übergeben werden sollen.

Während des normalen Betriebszustandes des Geschwindigkeits- und Abstandsregelsystems 3 sendet der Sensor 9 zum Beispiel alle 60 Millisekunden in Fahrtrichtung des Fahrzeuges 1 Sensorsignale aus, welche von den Hindernissen und Fahrzeugen, die sich im Signalstrahl 27 des Sensors 9 befinden, reflektiert werden. Aus diesen reflektierten Signalen wird von einer im Sensor 9 integrierten Signalaufbereitungsschaltung, der Abstand und die relativ Geschwindigkeit der sich vor dem Fahrzeug befindenden Hindernisse bestimmt.

Diese Meßergebnisse werden von der Abstandsregeleinrichtung 10 ausgewertet, welche über das Bussystem 4 des Kraftfahrzeuges an den PC 14 weitergeleitet werden.

Pro Zeiteinheit werden Objektdaten (Abstand, relativ Geschwindigkeit und regelspezifische Daten) ermittelt, aus denen die Abstandsregeleinrichtung 10 den voraussichtlichen Fahrkorridor des Regelobjektes bestimmt. Über den CAN-Bus 4 werden die von der Abstandsregeleinrichtung 10 kommenden Daten in die Datentanpassungsschaltung 13 eingelesen.

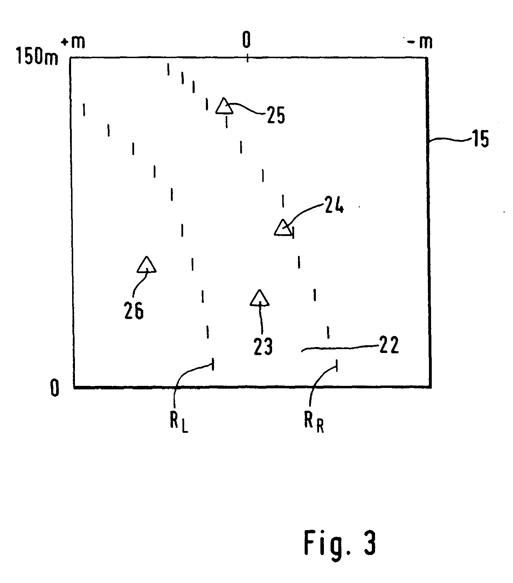

Die so vom Sensor 9 ermittelten Objekte 23, 24, 25 und 26 sind auf dem Monitor 15 dargestellt. (Figur 3). Der Abstand der Hindernisse 23, 24, 25, 26 zum Fahrzeug 1 wird dabei vom Radarsensor 9 in Form von Koordinaten angegeben, wobei der Sensor 9 im Punkt x=0 und y=0 angeordnet ist.

Das Anzeigekoordinatensystem des Monitors 15 korelliert dabei mit dem Koordinatensystem des Sensorstrahles 27. So ist auf der x-Koordinate ein Abstand von 0 - 155 Meter dargestellt, was dem maximalem Detektionsbereich des Sensorstrahles 27 entspricht. Auf der y-Koordinate wird eine Breite von minus bis plus 13 Metern dargestellt, was annähernd dem Sichtbereich des Sensors 9 mit seinem Sensorstrahl 27 entspricht.

Die vom Sensor 9 ermittelten Positionsdaten x, y jedes Hindernisses 23, 24, 25, 26 werden auf die Monitorausdehnung im Verhältnis umgerechnet und abstandsgetreu wiedergegeben. Darüber hinaus wird der von der Abstandsregeleinrichtung 10 bestimmte Fahrkorridor 22 dargestellt, der sich wie folgt berechnet:

$$dY_L = \underline{(dX)^2} / 2R_L \quad bzw. \quad dY_R = (dX)^2 / 2R_R.$$

Dabei ist X ein senkrechter Abstand vom Kraftfahrzeug nach vorn, wählbar zwischen 0 bis 155 m, während $R_R$ bzw $R_L$ die Kurvenradien des rechten und des linken Fahrzeugrades darstellen.

Zur Bestimmung der voraussichtigen Fahrspur des zu regelnden Kraftfahrzeuges wird der Kurvenradius jedes Vorderrades des Fahrzeuges bestimmt. Der Kurvenradius des rechten Vorderrates $R_R$ bestimmt sich aus der Geschwindigkeit $v_R$ des Vorderrades durch die Gierrate, welche durch den Gierratensensor 11 bestimmt wird. Analog dazu bestimmt sich der Kurvenradius $R_L$ des linken Vorderrades durch die Geschwindigkeit $v_L$ des linken Radius durch die gemessenen Gierrate.

Der Fahrkorridor wird als Funktion der Radien $R_R$ und $R_L$ des rechten und linken Vorderrades gebildet. Die Breite des Fahrkorridors weist dabei mindestens die Spurbreite der beiden Räder auf

Um den Fahrkorridor sehr genau zu bestimmen, werden zusätzlich auch die Kurvenradien der beiden Hinterräder errechnet. Die Kurvenradien des rechten und linken Hinterrades werden analog den Vorderrädern ermittelt, indem die Geschwindigkeit des jeweiligen Rades durch die Gierrate dividiert wird.

Auf diese Art und Weise läßt sich einfach eine Draufsicht auf die von dem Geschwindigkeits- und Abstandsregelsystem 3 detektierte Regelsituation erreichen, so daß das Bedienpersonal eine räumliche Vorstellung von dieser erhält. Dabei werden entweder alle detektierten Objekte oder nur die sich bewegenden Objekte angezeigt.

**Patentansprüche**

1. Einrichtung zur Darstellung einer von einer Abstandsregeleinrichtung (10) eines Kraftfahrzeugs (1) bestimmten Regelsituation auf einer Anzeigeeinrichtung (15) und einer Anzeigesteuereinrichtung (14),
wobei die Abstandsregeleinrichtung (10) mit einem Sensor (9) verbunden ist, welcher die Koordinaten der vor dem Kraftfahrzeug befindlichen Hindernisse detektiert und in Form von Daten an die, die voraussichtliche Fahrspur des Kraftfahrzeugs bestimmende Abstandsregeleinrichtung weiterleitet, wobei die Abstandsregeleinrichtung aus diesen Daten ein Regelobjekt bestimmt, auf welches der Abstand des Kraftfahrzeugs geregelt wird,
**dadurch gekennzeichnet, dass**
die Abstandsregeleinrichtung (10) mit der Anzeigesteuereinrichtung (14) verbunden ist, welche die vom Sensor (9) erfassten und von der Abstandsregeleinrichtung (10) errechneten Daten in eine annähernd maßstabsgerechte Draufsicht der Regelsituation vor dem Fahrzeug (1) umsetzt, welche auf der Anzeigeeinrichtung (15) zur Anzeige gebracht wird.

2. Einrichtung nach Anspruch 1 **dadurch gekennzeichnet, daß** die Draufsicht die im gesamten Erfassungsbereich des Sensors (9) detektierten Hindernisse (23, 24, 25, 26) und deren Anordnung in der voraussichtlichen Fahrspur (22) des Fahrzeuges (1) darstellt.

3.  Einrichtung nach Anspruch 1 oder 2 **dadurch gekennzeichnet, daß** die Abstandsregeleinrichtung (10) über eine Datenanpassungseinrichtung (13) mit der Anzeigesteuerungseinrichtung (14) verbunden ist, wobei die Datenanpassungseinrichtung (13) eine Recheneinheit (16) aufweist, welche mit mehreren Schnittstellen (18, 19; 20, 21) verbunden ist, wobei jede Schnittstelle (18, 19; 20, 21) eine unveränderliche oder eine frei programmierbare Konfiguration aufweist, und die Abstandsregeleinrichtung (10) an eine erste, ihrer elektronischen Konfiguration entsprechenden Schnittstelle (18,19) und die Anzeigesteuereinrichtung (14) an eine zweite ausgewählte Schnittstelle (20, 21) angeschlossen ist, wobei die Recheneinheit (16) nach Erhalt eines Steuerbefehls eines von mehreren in einem Speicher (17) abgelegten Anpassungsprogrammen aktiviert, welches die von der Anzeigesteuereinrichtung (14) und der Abstandsregeleinrichtung (10) auszutauschenden Daten aneinander anpaßt.

4.  Einrichtung nach Anspruch 3 **dadurch gekennzeichnet, daß** die Recheneinheit (16) zur Aus- und Eingabe von Daten in die Abstandsregeleinrichtung (10) mit einer seriellen Schnittstelle (19) oder einer Busschnittstelle (18) verbunden ist, während die Datenein- und -ausgabe mit der Anzeigesteuereinrichtung (14) über eine serielle (21) oder parallele Schnittstelle (20) erfolgt.

5.  Einrichtung nach Anspruch 4, **dadurch gekennzeichnet, daß** die Auswahl der Daten, welche von der Abstandsregeleinrichtung (10) übertragen werden, in der Anzeigesteuereinrichtung (14) konfigurierbar ist.

6.  Einrichtung nach Anspruch 5 **dadurch gekennzeichnet, daß** zu Simulationszwecken über die Anzeigesteuereinrichtung (14) Änderungen der Regelsituation in die Abstandsregeleinrichtung (10) eingebbar sind, wobei die von der Abstandsregeleinrichtung (10) neu berechneten Daten als Draufsicht der Regelsituation auf der Anzeigeeinrichtung (15) dargestellt werden.

7.  Einrichtung nach Anspruch 6 **dadurch gekennzeichnet, daß** zu Simulationszwecken eine Fahrspurbreite geändert wird.

8.  Einrichtung nach Anspruch 6 **dadurch gekennzeichnet, daß** zu Simulationszwecken bestimmte, vom Sensor (9) erfaßte Objekte bei der Bestimmung der Fahrspur unberücksichtigt bleiben.

**Claims**

1.  Device for representing a control situation determined by a distance control device (10) of a motor vehicle (1) on a display device (15) and a display control device (14), wherein the distance control device (10) is connected to a sensor (9) which detects the coordinates of the obstacles located ahead of the motor vehicle and forwards them in the form of data to the distance control device determining the probable path of the motor vehicle, wherein the distance control device determines a control object from this data, to which the distance of the vehicle is adjusted, **characterized in that**
    the distance control device (10) is connected to the display control device (14), which converts the data recorded by the sensor (9) and calculated by the distance control device (10) into a plan view, approximately to scale, of the control situation ahead of the vehicle (1), which is displayed on the display device (15).

2.  Device according to claim 1, **characterized in that** the plan view displays the obstacles (23, 24, 25, 26) detected in the entire recording range of the sensor (9) and their arrangement in the probable path (22) of the vehicle (1).

3.  Device according to claim 1 or claim 2, **characterized in that** the distance control device (10) is connected to the display control device (14) via a data adaptation device (13), wherein the data adaptation device (13) has an arithmetic unit (16) which is connected to a plurality of interfaces (18, 19; 20, 21), wherein each interface (18, 19; 20, 21) has a fixed or a freely programmable configuration, and the distance control device (10) is connected to a first interface (18, 19) corresponding to its electronic configuration and the display control device (14) is connected to a second selected interface (20, 21), wherein the arithmetic unit (16), on receipt of a control command, activates one of a plurality of adaptation programs stored in a memory (17), said adaptation program adapting the data to be exchanged from the display control device (14) and the distance control device (10).

4.  Device according to claim 3, **characterized in that** the arithmetic unit (16) for outputting and inputting data into the distance control device (10) is connected to a serial interface (19) or a bus interface (18), while the data input and output is effected using the display control device (14) via a serial (21) or parallel interface (20).

5. Device according to claim 4, **characterized in that** the selection of the data to be transmitted by the distance control device (10) can be configured in the display control device (14).

6. Device according to claim 5, **characterized in that** for simulation purposes changes in the control situation can be input into the distance control device (10) via the display control device (14), wherein the data newly calculated by the distance control device (10) is displayed as a plan view of the control situation on the display device (15).

7. Device according to claim 6, **characterized in that** for simulation purposes a path width is changed.

8. Device according to claim 6, **characterized in that** for simulation purposes particular objects recorded by the sensor (9) are left out of account when determining the path.

**Revendications**

1. Dispositif pour présenter sur un dispositif d'affichage (15) et sur un dispositif de commande d'affichage (14) une situation de réglage déterminée par un dispositif de réglage de distance (10) d'un véhicule automobile,
dans lequel le dispositif de réglage de distance (10) est relié à un capteur (9), lequel détecte les coordonnées des obstacles se trouvant devant le véhicule automobile et les transmet sous forme de données au dispositif de réglage de distance qui détermine la voie prévue pour le véhicule automobile, le dispositif de réglage de distance déterminant alors à partir de ces données un objet de réglage sur lequel la distance du véhicule automobile sera réglée,
**caractérisé en ce que**
le dispositif de réglage de distance (10) est relié au dispositif de commande d'affichage (14), lequel convertit les données saisies par le capteur (9) et calculées par le dispositif de réglage de distance (10) en une vue en plan approximativement à l'échelle de la situation de réglage qui existe devant le véhicule (1) et qui est affichée sur le dispositif d'affichage (15).

2. Dispositif selon la revendication 1, **caractérisé en ce que** la vue en plan représente les obstacles (23, 24, 25, 26) détectés dans l'intégralité de la zone de saisie du capteur (9) et leur position dans la voie (22) prévue pour le véhicule automobile.

3. Dispositif selon la revendication 1 ou 2, **caractérisé en ce que** le dispositif de réglage de distance (10) est relié au dispositif de commande d'affichage (14) par l'intermédiaire d'un dispositif d'adaptation de données (13), le dispositif d'adaptation de données (13) comprenant une unité de calcul (16) qui est reliée à plusieurs interfaces (18, 19 ; 20, 21), chaque interface (18, 19 ; 20, 21) possédant une configuration invariable ou une configuration librement programmable, le dispositif de réglage de distance (10) étant connecté à une première interface (18, 19) qui correspond à sa configuration électronique et le dispositif de commande d'affichage (14) étant connecté à une deuxième interface sélectionnée (20, 21), l'unité de calcul (16) activant alors, après réception d'un ordre de commande, l'un de plusieurs programmes d'adaptation enregistrés dans une mémoire (17), lequel programme adapte les unes aux autres les données que le dispositif de commande d'affichage (14) et le dispositif de réglage de distance (10) doivent s'échanger.

4. Dispositif selon la revendication 3, **caractérisé en ce que,** pour la sortie de données et l'entrée de données dans le dispositif de réglage de distance (10), l'unité de calcul (16) est reliée à une interface série (19) ou à une interface de bus (18), tandis que l'entrée et la sortie de données avec le dispositif de commande d'affichage (14) s'effectuent par l'intermédiaire d'une interface série (21) ou parallèle (20).

5. Dispositif selon la revendication 4, **caractérisé en ce que** la sélection des données qui sont transmises par le dispositif de réglage de distance (10) peut être configurée dans le dispositif de commande d'affichage (14).

6. Dispositif selon la revendication 5, **caractérisé en ce que,** pour réaliser une simulation, des modifications de la situation de réglage peuvent être introduites dans le dispositif de réglage de distance (10) par l'intermédiaire du dispositif de commande d'affichage (14), les données recalculées par le dispositif de réglage de distance (10) étant alors présentées sur le dispositif d'affichage (15) sous la forme d'une vue de dessus de la situation de réglage.

7. Dispositif selon la revendication 6, **caractérisé en ce que,** pour la simulation, on modifie une largeur de voie.

8. Dispositif selon la revendication 6, **caractérisé en ce que,** pour la simulation, lors de la détermination de la voie, certains objets détectés par le capteur (9) sont laissés non pris en compte.

Fig. 1

EP 1 014 109 B1

Fig. 2

EP 1 014 109 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0464821 A